# EUROPEAN PATENT APPLICATION

(11) **EP 4 474 134 A1**
(43) Date of publication of application: **11.12.2024**
(21) Application number: 24175048.8
(22) Date of filing: 09.05.2024
(51) Int. Cl.: B29C 64/10, B29C 64/165, B29C 64/209, B29C 64/218, B29C 64/232, B29C 64/236, B29C 64/241, B29C 64/245, B29C 64/25, B29C 64/295, B29C 64/30, B29C 64/364, B29C 70/06, B29C 70/12, B29C 70/16, B29C 70/34, B29C 70/38, B29C 70/54, B29C 71/00, B33Y 10/00, B33Y 30/00

(54) **3D PRINTER FOR PRODUCTION OF HIGH-PERFORMANCE STRUCTURAL PARTS**

(30) Priority: 15.05.2023 IT 202300009759
(71) Applicant: Thetis S.r.l., 66100 Chieti (IT)
(72) Inventor: BARILE, Marco, 80136 NAPOLI (IT)
(74) Representative: Cutropia, Gianluigi

(57) **Abstract**

A 3D printer (100) comprising a working box (1), a lamination plane (2) arranged in the chamber, first motion means (25) for moving the lamination plane (2), an unwinder (32) whereon at least one spool (31) is mounted, in which composite material (3) is wound in the form of towpreg or slit tape (30) comprising continuous fiber reinforced resin, a deposition head movably disposed in the chamber to deposit composite layers on the lamination plane (2), and second motion means (5) for moving the deposition head (4).

## Description

The present invention relates to a 3D printer for the production of high-performance structural parts.

In general terms, when talking about 3D printing or additive manufacturing (AM), reference is made to a manufacturing process of three-dimensional parts performed by adding material, which is deposited layer upon layer, until the desired shape is achieved.

Specifically, after making a project for the part with CAD, the part is reproduced in machine language (digital model) through a software associated with the 3D printer, and then it is fabricated and subjected to product stabilization and finishing processes.

3D printing offers considerable flexibility in terms of the geometries of the part to be made. In fact, in traditional manufacturing processes, such as molding, every time a new product is created, or when one wants to modify its initial design to introduce improvements, it is necessary to build an appropriate mold or template that is specific for the object to be made or modified. Of course, this entails a non-recurring cost, which can be a high cost when considering, for example, closed-mold processes, i.e. processes involving the use of a mold and of a counter mold. Costs increase further if the material used to make the part requires high processing temperatures. By way of example, in the case of composite materials with high-performance thermoplastic matrix (e.g., PAEK family), consolidation temperatures of about 380°C must be reached.

Another non-negligible element is the quality of the final product, which is obviously conditioned by the application of either an automated (3D printing) or predominantly manual (traditional methods) manufacturing process, in terms of repeatability.

Nowadays, the most common additive manufacturing processes are: material extrusion (ME); material jetting (MJ); binder jetting (BJ) and powder bed fusion (PBF).

Obviously, each 3D printing process has its advantages and disadvantages in the fabrication of parts made of metal or natural and/or reinforced polymer composites and requires specific conditions of the material, such as shape, state (solid or liquid) and physical properties (viscosity and melting temperature). Therefore, even when selecting the 3D printing processes, it is necessary to properly analyze the requirements of the application of interest (e.g., resolution; geometry complexity; mechanical properties) and therefore the materials and the costs.

Whilst they offer some versatility in terms of realizable geometries, the aforementioned 3D printing methods are unable to guarantee mechanical properties such as to be considered adequate to fabricate primary structural components, as the maximum values that can be obtained in terms of tensile strength in the case of composite materials do not exceed 150-200MPa at best. Such a limitation stems mainly from the instability of the starting material and from the poor capability to control the cooling of semicrystalline thermoplastics during deposition.

In the aerospace and automotive sectors, the most commonly used materials are aluminum and carbo resin. Al 7075-T651 aluminum has a maximum tensile strength of 462-538 MPa and a yield strength of 372-462 MPa. Carbo resin has a tensile strength that can range from as low as 500-600MPa up to 2200-2500MPa. Therefore, the products made with the abovementioned traditional AM techniques have tensile strength values that are significantly lower than the target performance, relative to the currently used materials, especially taking into account the fact that the market demand is constantly pushing for materials with a high ratio between strength and weight and between rigidity and weight, that is to say composite materials.

Nowadays, there are also other 3D printing techniques capable of providing products with a higher performance, as they use the so-called long-fiber composite materials. A 3D printer is commercially available that can fabricate parts with a composite material (carbo resin) having a tensile strength of 700-800MPa (ASTM3039). However, even in this case, the mechanical properties of the material are far from the characteristics required in various industrial sectors.

US2014060742A1 describes a 3D printer comprising a fiber application head, a displacing system to displace the fiber application head, fiber storing means and a fiber conveying means to convey the fibers from the storing means to the application head. Such a 3D printer uses pre-engineered fibers, such as fibers with nylon-type resins or with PEEK-type resins. However, such a 3D printer does not provide any vacuum creation system in the working box where the fibers are deposited. As a result, the layering of fibers to obtain the final product is not efficient.

US2019322045A1 describes a 3D printing system having a deposition head with a tape assembly for compacting a fiber material onto the surface of an object being produced. The working box can be thermally adjusted, but no vacuum creation system is provided.

US5700347A describes a thermoplastic head for laying down a plurality of thermoplastic resin-impregnated tapes to form a composite, but it does not mention the working box in which such a head is mounted.

US6527894B1 describes a method for producing a fiber-reinforced plastic component using a vacuum hood. Such a method provides for setting up an assembly comprising a textile semi-finished product, a pre-impregnated semi-finished product, a resin film, and a profile tool, and then cover such an assembly with a hood, sucking in air to create vacuum. Otherwise said, the vacuum hood is applied to a traditional pre-impregnated fiber product not obtained with a 3D printer. US6527894B1 does not suggest that such type of vacuum hood can be arranged in a working box of a 3D printer, nor does it suggest that such type of vacuum hood works with a pre-impregnated fiber product obtained with a 3D printer.

The purpose of the present invention to eliminate the drawbacks of the prior art by providing a 3D printer for the production of structural parts that have a higher performance, are environmentally more sustainable than the ones currently available in the market and are also capable of greatly reducing the post-processing steps required when using the traditional 3D printing methods.

Another purpose of the invention is to provide such a versatile 3D printer that is capable of building a wide range of small to medium-sized primary structural parts rapidly and with a high accuracy degree.

Still another purpose of the invention is to provide such a 3D printer that is practical and inexpensive for the end user.

These purposes are achieved in accordance with the invention with the features of the appended independent claim 1.

Advantageous embodiments of the invention appear from the dependent claims.

The 3D printer according to the invention is defined by claim 1.

The 3D printer according to the invention can process any composite material, whether based on thermoplastic resins or thermosetting resins reinforced with fibers, to produce high-performance structural parts that are not currently reproducible with the commercially available 3D printers. The 3D printer according to the invention can use low-cost composite materials that can be recycled and welded.

In particular, the 3D printer according to the invention can process composite materials that are reinforced with medium and high-modulus long fibers in towpreg format (with a lower cost than slit tape) and are able to exceed the structural limitations of the components that are currently produced with the aforementioned AM/3D printing technologies (e.g., extrusion or co-extrusion, etc.).

Depending on the requirements of the different applications, the 3D printer according to the invention can process polymers reinforced with carbon fiber, glass fiber, Kevlar fiber, natural fiber such as jute, polyethylene fiber with high molecular weight, etc.

The ultimate goal of the 3D printer according to the invention is to provide a fabrication technology that, on the one hand, will enable a realistic replacement of parts that are currently made of metal, whereas, on the other hand, will open the door to the fabrication of new components that are currently not reproducible with the AM.

The 3D printer according to the invention introduces a product innovation based on a breakthrough in terms of materials and manufacturing process, as it implements a technology able to perform the deposition, the compaction and the consolidation of pre-impregnated thermoplastic composite material (fiber and matrix), or thermosetting material in situ, in both cases with the possibility of applying a thermal cycle inside the working box of the printer, thus achieving strength values of the produced parts that are at least twice as high as what the 3D printing market offers today.

Further features of the invention will become clearer from the following detailed description, which refers to a purely illustrative and therefore non-limiting embodiment, illustrated in the accompanying drawings, wherein:
Fig. 1 is a side view of the 3D printer according to the invention;
Fig. 2 is a perspective rendering view of the 3D printer in Fig. 1;
Fig. 3 is a diagrammatic view illustrating the freedom degrees of the 3D printer according to the invention;
Fig. 3A is a diagrammatic view as Fig. 3 illustrating another movement mode of the deposition head and of the lamination plane;
Fig. 4 is a block diagram illustrating an operation of the motion means of the lamination plane and of the deposition head of the 3D printer according to the invention; and
Fig. 5 is a partially sectional diagrammatic side view the 3D printer according to the invention, wherein a vacuum bag has been added to a product laminated on the lamination plane.

With the help of the Figures, the 3D printer according to the invention, which is comprehensively denoted by the reference numeral 100, is described.

The 3D printer (100) comprises a working box (1) defining a hermetically sealed chamber (10). The working box (1) has a parallelepiped shape having indicatively a square base with a side of 400 - 2000 mm and a height of 300 - 1,500 mm.

The 3D printer (100) comprises a lamination plane (2) arranged in the working box (1). The lamination plane (2) is suitable for receiving layers of composite material stacked on top of each other in order to be laminated. The lamination plane (2) can have a square or rectangular surface with an approximate side of 400 to 2000 mm. The lamination plane (2) has an integrated heating system (20) to heat the lamination plane to a temperature suitable for the lamination process of composite material according to the resin system used. The heating system (20) of the lamination plane may comprise electric heaters or heat exchangers integrated in the lamination plane (2) and is used to uniformly heat the lamination plane.

The lamination plane (2) is movably mounted in the chamber (10) of the working box. First motion means (25) move the lamination plane (2).

A mold (21) conformed to the shape of the final product to be obtained can be arranged on the lamination plane (2), or the mold can be installed directly on the motion system and not on the lamination plane (2).

The 3D printer (100) uses a composite material (3) in slit tape or towpreg (30) format, comprising fiber-reinforced resin. The resin can generally be of thermoplastic or thermosetting type. The fiber can be a long continuous fiber or a short discontinuous fiber. The towpreg can have a constant width, such as 1/8" - 1/4". The towpreg (30) is wound into at least one spool (31) mounted on an unwinder (32) arranged outside the working box (1). The 3D printer may comprise a plurality of spools (31). The spool (31) is arranged outside the working box (1), as the high temperature of the working box would melt the spool material.

The towpreg (30) unwound from the spool (31) enters the chamber (10) of the working box (1) and feeds a deposition head (4) that comprises a deposition nozzle (43) suitable for depositing a composite layer (33) on the lamination plane (2). For such a purpose, the deposition head (4) can move in the chamber (10) of the working box (1).

In the case where the 3D printer (100) comprises a single spool (31), the deposition nozzle (43) has a width such to deposit a layer comprising a single strip having an indicative width of 1/8" - 1/4". In the case where the 3D printer (100) comprises multiple spools (31), the towpregs (30) are fed to the deposition head (4) and the deposition nozzle (43) has a width such to deposit a layer comprising multiple side-by-side strips, wherein each strip has an indicative width of 1/8" - 1/4".

The deposition head (4) comprises a compaction roller (40) disposed behind the deposition nozzle (43) to compact the composite material (3) deposited on the lamination plane (2) by the deposition nozzle (43).

The compaction roller (40) can be made of metal or silicone rubber and has a variable width depending on the number of spools (31) used. In the case where the 3D printer has only one spool (31), the compaction roller (40) can have an indicative width of 8 mm. In the case where the 3D printer has multiple spools (31), the compaction roller (40) may have a proportional width. Obviously, the width (axial extension) of the compaction roller (40) is essentially equal to the width of the deposition nozzle (43).

The deposition head (4) also comprises a cutting device (41) to cut the composite material (3) that has been deposited on the lamination plane (2).

The deposition head (4) is moved by second motion means (5) in order to move in the chamber (10) of the working box. The second motion means (5) are arranged in the chamber (10) of the working box (1).

The deposition head (4) is moved from a start position to an end position to deposit a layer of composite material on a mold (21) or on the lamination plane (2). When the deposition head (4) has reached the end position, the cutting device (41) cuts the towpreg (30), and the deposition head (4) is moved to the start position in order to deposit a new layer of composite material (3).

The deposition head (4) also comprises a heating system (42) arranged near the compaction roller (40) inside the chamber (10) of the working box. Being mounted on the deposition head (4), the heating system (42) moves together with the deposition head (4).

The heating system (42) of the deposition head heats the composite material (3) coming out of the deposition nozzle (43) and is located at the interface between the compaction roller (40) and the lamination plane (2). The composite material is heated by the heating system (42) to a temperature ranging from 50°C to 500°C, depending on the composite material used. The heating system (42) can be a radiation system, e.g., laser or pulsed light, or a hot air system, e.g., hot gun.

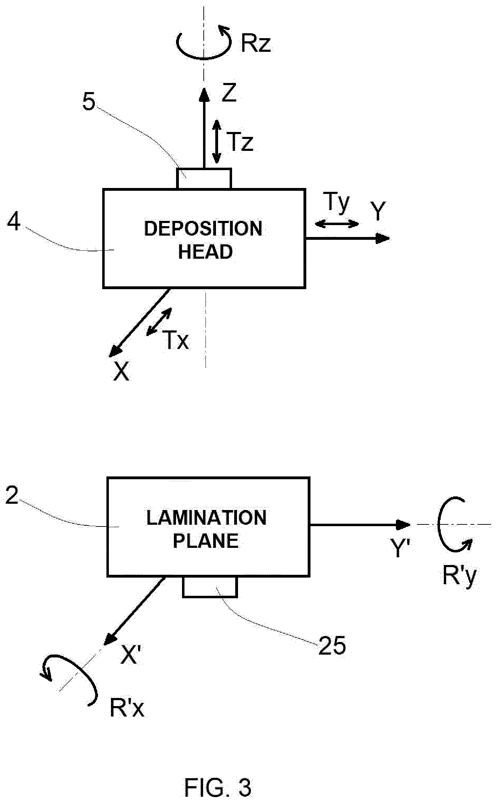

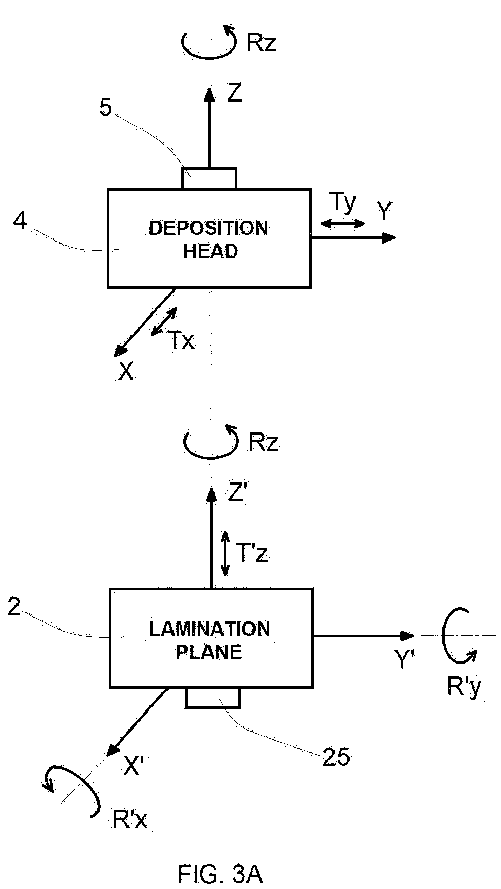

With reference to Figs. 3 and 3A, the assembly comprising the deposition head (4) and the lamination plane (2) has six freedom degrees that can be configured in two motion modes.

Referring to Fig. 3, the first motion mode provides that the second motion means (5) move the deposition head (4) with four freedom degrees and the first motion means (25) move the lamination plane (2) with two freedom degrees.

Considering a first set of three Cartesian axes (X, Y, Z) with origin at a central position of the deposition head (4), the deposition head (4) can translate along the three axes of the first set of three Cartesian axes (X, Y, Z) and can rotate around the vertical axis (Z) of the first set of three Cartesian axes.
Tx indicates the translation of the deposition head (4) along the X axis;
Ty indicates the translation of the deposition head (4) along the Y axis;
Tz indicates the translation of the deposition head (4) along the Z axis;
Rz indicates the rotation of the deposition head (4) around the Z axis.

In this way, the deposition head (4) can follow any kind of trajectory in the space inside the working box (1).

Considering a second pair of horizontal axes (X', Y') with origin at a central position of the lamination plane (2), the lamination plane (2) can rotate around the first horizontal axis (X') of the second pair of axes and can rotate around the second horizontal axis (Y') of the second pair of axes.

R'x indicates the rotation of the lamination plane (2) around the X' axis of the second pair of axes;

R'y indicates the rotation of the lamination plane (2) around the Y' axis of the second pair of axes.

In this way, the lamination plane (2) can be tilted in two directions inside the working box (1).

Referring to Fig. 3A, the second motion mode provides that the second motion means (5) move the deposition head (4) with three freedom degrees and the first motion means (25) move the lamination plane (2) with three freedom degrees.

In such a case, the deposition head (4) has three freedom degrees. The deposition head (4) can translate along the horizontal axes (X, Y) and rotate about the vertical axis (Z). Therefore, the deposition head can follow any trajectory on a horizontal plane.

The lamination plane (2) has three freedom degrees. The lamination plane (2) can rotate around the horizontal axes (X, Y) to tilt in two directions and can translate along the vertical axis (Z) to approach and move away from the deposition head.

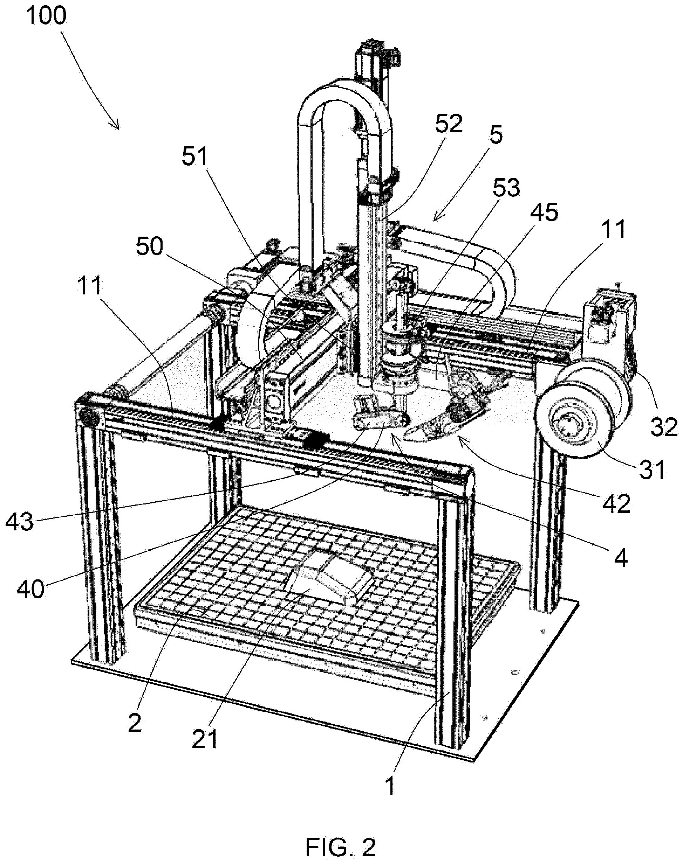

Referring to Fig. 2, the deposition head (4) comprises a bracket (45) that supports the deposition nozzle (43), the compaction roller (40), the cutting device (41) and the heating system (42). The bracket (45) of the deposition head is moved by the second motion means (5).

The second means (5) comprise:
- a crosspiece (50) slidingly mounted in horizontal direction on two rails (11) arranged in the working box (1) so as to slide along a horizontal Y axis,
- a carriage (51) slidingly mounted in horizontal direction on the crosspiece (50) so as to slide along a horizontal X axis,
- an upright (52) slidingly mounted in vertical direction on the carriage (51) so as to slide along a vertical Z axis, and
- a shaft (53) revolvingly mounted in a flange of the upright (52) so as to rotate about a vertical Z axis.

The shaft (53) of the motion means is connected to the bracket (45) that supports the deposition nozzle (43), the compaction roller (40), the cutting device (41), and the heating system (42) of the deposition head.

A first actuator drives the crosspiece (50) in translation; a second actuator drives the carriage (51) in translation; a third actuator drives the upright (52) in translation; and a fourth actuator drives the shaft (53) in rotation.

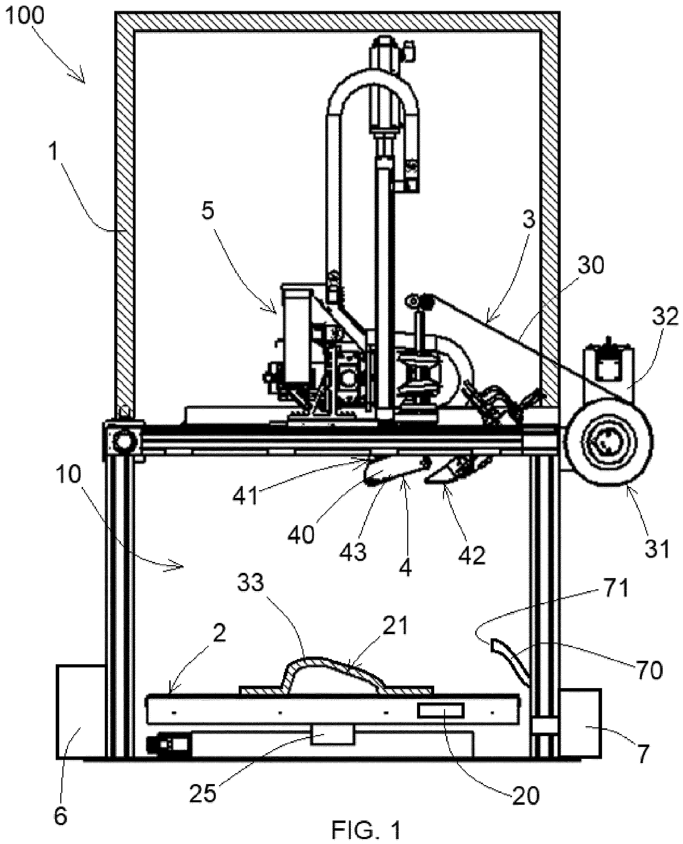

Returning to Fig. 1, the 3D printer (100) comprises a temperature conditioning system (6) to control the temperature in the working box (1). The temperature conditioning system (6) may be an air conditioner capable of delivering cold air or warm air in the chamber (10) of the working box or a heat exchanger in which a heat transfer fluid circulates.

The 3D printer (100) also comprises a vacuum creation system (7) configured to create vacuum in the chamber (10) of the working box. For such a purpose, the chamber (10) of the working box is airtight.

The vacuum creation system (7) may comprise an air suction pump. The vacuum creation system (7) is configured to achieve different vacuum levels inside the chamber (10) of the working box, depending on the type of composite material used. The vacuum creation system (7) is configured to obtain at least an average vacuum of 1 to 10-3 mBar.

The vacuum created in the chamber (10) of the working box allows for a better and more efficient compaction of the composite layers (33) deposited by the deposition head (4).

The vacuum creation system (7) is connected to a tube (70) having a mouth (71) arranged in the chamber (10) of the working box.

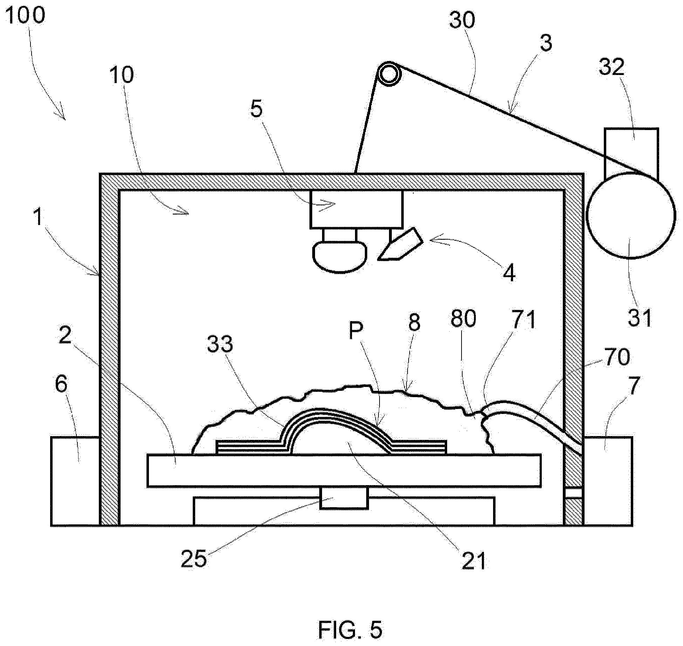

Referring to Fig. 5, the mouth (71) of the tube of the vacuum creation system is suitable for being connected to a valve (80) of a vacuum bag (8) arranged on the lamination plane (2) above a product (P) obtained by laminating the composite layers.

Preferably, after applying the vacuum bag (8) on the product (P) arranged on the lamination plane (2), a vacuum measurement test is performed to verify the tightness of the vacuum bag (8). The test can be performed 10-12 minutes after the vacuum is made, and before the product (P) is subjected to a temperature increase. Specifically, the test should be performed for a time interval of no more than 5 minutes, and in order to be considered successful, the measured vacuum level should preferably be lower than 6 mBar, with a loss rate preferably not higher than 0.4 mBar/min.

The operation of the 3D printer (100) is described below.

The second motion means (5) move the deposition head (4) to a start position above the lamination plane (2).

The first motion means (25) move the lamination plane (2) to the desired angle according to the end product to be made.

The composite material (3) in the form of towpreg or slit tape (30) is unwound from the spool (31) by means of the unwinder (32) and is fed to the deposition nozzle (43) of the deposition head, which deposits it on the lamination plane (2).

The second motion means (5) move the deposition head (4) along a travel in which the compaction roller (40) compacts a layer of composite material on the lamination plane (2). The heating system (42) heats the layer of composite material deposited on the lamination plane (2) to facilitate the compaction of such a layer by means of the compaction roller.

When the travel of the deposition head (4) ends, the cutting device (41) cuts the composite material (3), and the second motion means (5) move the deposition head (4) to the start position. During the travel of the deposition head (4), the first motion means (25) can move the lamination plane (2) to change its inclination.

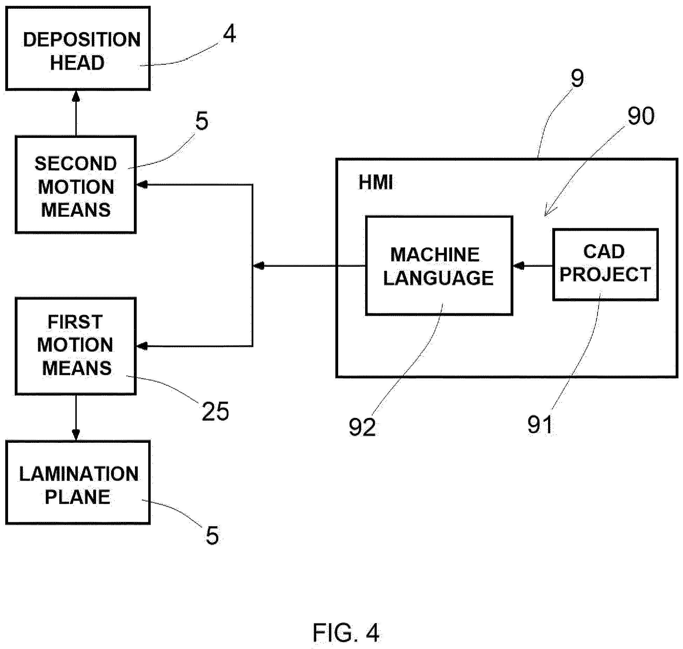

With reference to Fig. 4, the motion of the deposition head (4) and of the lamination plane (2) is controlled and managed by a human machine interface (HMI) (9) that comprises software (90) capable of converting a CAD project (91) into machine language (92) suitable for controlling the first motion means (25) and the second motion means (5) in order to move the lamination plane (2) and the deposition head (4).

The software (90) of the HMI is configured to vary the travel width of the deposition head (4) with increments or decrements, even at each composite layer (33) that is being deposited. Being able to adjust the width of the deposited layer of material, unwanted gaps and overlaps between the adjacent deposited layers are significantly reduced.

The software (90) of the HMI is configured to manage each trajectory of the deposition head (4), the speed of the deposition head (4), the heating system (42), and to operate the cutting device (41) to cut the composite material at the end of the travel of the deposition head (4), so as to save the waste of an end portion (net trim) of the composite material or possibly add an extra portion of composite material whenever required.

During a travel of the deposition head (4), the towpreg (30) is deposited with a predetermined speed so that it can conform to the surface of the lamination plane (2) and possibly of the mold (21) arranged on the lamination plane. The fibers of the composite layers (33) are not constrained on geodesic trajectories, but can meet specific orientation requirements based on the movement of the deposition head (4).

The pressure action of the compaction roller (40) of the deposition head is combined with the heating action of the heating system (42) to compact the composite material on the lamination plane (2). By means of the heating system (42), the composite material can be heated up to 450°C during the lamination process. Such a heating system (42) of the deposition head, in combination with the heating system (20) of the lamination plane (2), is useful in the case of deposition of thermoplastic materials and to reduce thermal stresses.

The chamber (10) of the working box (1) can reach a temperature of 450°C. The temperature conditioning system (6) can control a cooling of the working box. Such cooling is useful in the case where the composite material (3) is a thermoplastic material that can be processed in situ by means of consolidation technology, but it is also useful for consolidating those materials for which a thermal post-consolidation cycle is required, as it allows for controlling the degree of crystallinity.

In the case where the composite material (5) is a thermosetting material, the 3D printer (100) can perform an automated preforming step, followed by the curing cycle, inside the working box (1), without using any other machinery. In such a case, the vacuum creation system (7) is used to create vacuum in the chamber (10) of the working box and/or in the vacuum bag (8) placed on the product (P) laminated on the lamination plane (2). If a vacuum bag (8) is provided, the vacuum creation system (7) also creates vacuum in the vacuum bag (8).

The applicant ascertained that, in addition to the vacuum creation system (7) that can be used downstream of the preforming step of the part, if the lamination is performed in the chamber (10) that is thermally adjustable and placed under vacuum, an additional improvement of the mechanical properties of the product can be achieved already at the pre-forming step.

The temperature conditioning system (6) is also used to heat the chamber (10) of the working box or to keep it at room temperature so that curing of the composite material placed in the vacuum bag (8) can take place.

In the case where the composite material (3) is a thermoplastic material, the 3D printer (100) can perform an automated pre-forming step and a thermal vacuum consolidation by means of the vacuum bag (8), the vacuum creation system (7) and the temperature conditioning system (6). Depending on the material, the 3D printer (100) can perform only the automated pre-forming step, without any vacuum post-consolidation, as the consolidation process of the final product will be performed in-situ.

Alternatively, it is possible to perform only the automated pre-forming process of the composite part with the 3D printer (100) and perform a curing or consolidation cycle in an autoclave or in a press with hot plates. This applies to both thermoplastic and thermoset matrix composite materials.

Numerous equivalent variations and modifications may be made to the present embodiment of the invention, within the scope of a person skilled in the art, but still within the scope of the invention as expressed by the appended claims.

## Claims

1. 3D printer (100) comprising:
- a working box (1) defining a chamber (10),
- a lamination plane (2) movably arranged in the chamber (10) of the working box,
- first motion means (25) for moving the lamination plane (2),
- an unwinder (32) whereon at least one spool (31) is mounted, in which composite material (3) is wound; said composite material (3) being in the form of slit tape or towpreg (30) comprising thermoplastic or thermosetting resin reinforced with long continuous fibers or short discontinuous fibers,
- a deposition head (4) movably disposed in the chamber (10) of the working box; said deposition head (4) being fed by said composite material (3) unwound from said at least one spool (31) and said deposition head (4) comprising a deposition nozzle (43) suitable for depositing composite layers (33) on said lamination plane (2), in order to obtain a product (P) by means lamination of composite layers (33); and
- second motion means (5) for moving said deposition head (4),
**characterized in that** it further comprises
a vacuum creation system (7) suitable for creating vacuum in said chamber (10) of the working box and/or in a vacuum bag (8) arranged in the chamber (10) of the working box to contain said product (P) obtained by laminating composite layers (33).

2. The 3D printer (100) according to claim 1, wherein said chamber (10) of the working box is air-tight and said vacuum creation system (7) is suitable for creating vacuum in said chamber (10) of the working box.

3. The 3D printer (100) according to claim 2, wherein said vacuum creation system (7) is configured for obtaining at least a medium vacuum from 1 to 10⁻³ mBar within said chamber (10) of the working box.

4. The 3D printer (100) according to any one of the preceding claims, wherein said vacuum creation system (7) is connected to a tube (70) having a mouth (71) disposed in the chamber (10) of the working box; said mouth (71) of the tube of the vacuum creation system (7) being suitable to be connected to a valve (80) of the vacuum bag (8).

5. The 3D printer (100) according to any one of the preceding claims, comprising a plurality of spools (31) of composite material feeding strips of slit tape or towpreg (30) to said deposition head (4) and said deposition nozzle (43) of the deposition head being suitable for simultaneously depositing a layer of composite material comprising multiple strips of towpreg (30) based on the number of spools.

6. The 3D printer (100) according to any one of the preceding claims, wherein said deposition head (4) comprises:
- a compaction roller (40) disposed near said deposition nozzle (43) for compacting the layer of composite material coming out of the deposition nozzle (43) and deposited on said lamination plane (2);
- a heating system (42) for heating the layer of composite material coming out of the deposition nozzle (43) and deposited on said lamination plane (2); and
- a cutting device (41) suitable for cutting the layer of composite material deposited on the lamination plane at the end of a travel of the deposition head (4).

7. The 3D printer (100) according to claim 6, wherein said heating system (42) of the deposition head is a radiation or hot air system.

8. The 3D printer (100) according to any one of the preceding claims, wherein said first motion means (25) are configured to move said lamination plane (2) with two freedom degrees, allowing a rotation of the lamination plane about a first vertical axis (X') and about a second vertical axis (Y') orthogonal to the first vertical axis, and said second motion means (5) are configured to move said deposition head (4) with four freedom degrees, allowing a translation of the deposition head along three axes (X, Y, Z) of a set of three Cartesian axes and a rotation of the deposition head (4) around a vertical axis (Z) of said set of three Cartesian axes.

9. The 3D printer (100) according to claim 8, wherein said second motion means (5) comprise:
- a crosspiece (50) mounted in such a way to slide in horizontal direction on two rails (11) arranged above the working box (1) along a horizontal axis Y,
- a carriage (51) mounted in such a way to slide in horizontal direction on the crosspiece (50) along a horizontal axis X,
- an upright (52) mounted in such a way to slide in vertical direction on the carriage (51) along a vertical axis Z, and
- a shaft (53) rotatably mounted in a flange of the upright (52) in such a way to rotate about a vertical axis Y;
the shaft (53) of the motion means is connected to a bracket (45) that supports the deposition nozzle (43), the compaction roller (40), the cutting device (41), and the heating system (42) of the deposition head.

10. The 3D printer (100) according to any one of claims 1 to 4, wherein said first motion means (25) are configured to move said lamination plane (2) with three freedom degrees, allowing a rotation of the lamination plane about a first vertical axis (X') and about a second vertical axis (Y') orthogonal to the first vertical axis and a translation of the lamination plane (2) along a vertical axis (Z') and said second motion means (5) are configured to move said deposition head (4) with three freedom degrees, allowing a translation of the deposition head along two horizontal axes (X, Y) of a set of three Cartesian axes and a rotation of the deposition head (4) around a vertical axis (Z) of said set of three Cartesian axes.

11. The 3D printer (100) according to any one of the preceding claims, comprising a temperature conditioning system (6) for controlling the temperature in the working box (1).

12. The 3D printer (100) according to any one of the preceding claims, comprising a human machine interface (HMI) (9) comprising a software (90) capable of converting a CAD project (91) into machine language (92) suitable for controlling the first motion means (25) and the second motion means (5) for moving the lamination plane (2) and the deposition head (4).
